# EUROPÄISCHE PATENTANMELDUNG

(11) **EP 2 377 750 A2**
(43) Veröffentlichungstag der Anmeldung: **19.10.2011**
(21) Anmeldenummer: 11002565.7
(22) Anmeldetag: 29.03.2011
(51) Int. Cl.: B62J 17/00, B62K 3/00

(54) **Zusammenlegbare Wetterschutzvorrichtung**

(30) Priorität: 16.04.2010 DE 102010015109
(71) Anmelder: Hase, Marec, 45731 Waltrop (DE)
(72) Erfinder: Hase, Marec, 45731 Waltrop (DE)
(74) Vertreter: Schneiders, Josef

(57) **Zusammenfassung**

Die Erfindung betrifft eine zusammenlegbare Wetterschutzvorrichtung (1) zur Iösbaren Anbringung an einem Sessel- oder Liegefahrrad (2), insbesondere einem Liegedreirad. Wetterschutzvorrichtungen dieser Art sind bereits im Stand der Technik bekannt. Diese sind jedoch nur mit größerem Aufwand zusammenklappbar und eignen sich nicht für ein schnelles Ein- und Aussteigen. Der Erfindung liegt daher die Aufgabe zugrunde, eine Wetterschutzvorrichtung (1) zu schaffen, welche ein einfaches Ein- und Aussteigen ermöglicht, schnell montierbar und auf ein kleines Packmaß faltbar ist. Diese Aufgabe löst die Erfindung durch eine Wetterschutzvorrichtung (1) mit biegeelastischen Stangen (5), einer von diesen gestützten Wetterschutzplane (4) und einer im Bereich des Vorbaus (8) des Sessel- oder Liegefahrrades (2) befindlichen Gelenkanordnung (6), in welcher die Stangen (5) zwischen einer Gebrauchsstellung und einer Ein- und Ausstiegsstellung der Wetterschutzvorrichtung verschwenkbar sind.

## Beschreibung

Die Erfindung betrifft eine zusammenlegbare Wetterschutzvorrichtung zur lösbaren Anbringung an einem Sessel- oder Liegefahrrad, insbesondere einem Liegedreirad.

Wetterschutzvorrichtungen dieser Art dienen dem Fahrer eines Sessel- oder Liegefahrrads als Schutz vor Wind und Regen. Da die Fahrer solcher Räder den Wunsch haben, sich bei jedem Wetter an der frischen Luft sportlich zu betätigen, wollen sie gerade nicht in einem geschlossenen Kabinenfahrzeug sitzen. Um ihnen also auch bei regnerischem Wetter einen Schutz bei der Ausfahrt zu bieten, wurden verschiedene Vorrichtungen geschaffen. Ebenso kann ein motorisiertes Sessel- oder Liegefahrrad mit einer solchen Wetterschutzvorrichtung aber auch für weniger sportlich ambitionierte Fahrer eine Alternative zum Auto darstellen.

Im Stand der Technik sind bereits Wetterschutzvorrichtungen für Liegeräder mit zwei oder drei Rädern bekannt. DE 10 2005 056 880 B4 offenbart eine Vorrichtung, die eine Front- und eine Heckverkleidung aufweist. Diese zweiteilig ausgeführte Verkleidung ist sehr voluminös und erfordert, selbst wenn sie zusammenklapp- oder -rollbar ausgeführt ist, ein gewisses Geschick beim Zusammenlegen und Verstauen. Die offenbarten geschlossenen Vorrichtungsvarianten dieser Verkleidungsart verursachen zudem Probleme beim Ein- und Aussteigen. Hier ist jeweils ein zeitraubender Türverschluss zu betätigen, bestehend aus zum Beispiel Drehverschlüssen, Klettverschlüssen oder Druckknöpfen. Ein schnelles Aus- und Einsteigen ist dadurch nicht möglich.

Eine ähnliche Vorrichtungsvariante offenbart DE 295 07 116 U1. Die dort beschriebene Wetterschutzvorrichtung ist als Hartschale ausgebildet. Sie umfasst eine Front- und eine Heckverkleidung. Eine leichte und platzsparende Beseitigung ist nur für die Heckverkleidung offenbart, nicht jedoch für die Frontverkleidung.

Bei den Ausführungsvarianten mit einer geschlossenen Kabine ergibt sich zusätzlich das Problem, dass ein Sichtfenster für den Fahrer erforderlich ist. Da der Fahrer jedoch durch die sportliche Betätigung schwitzt, beschlägt dieses Fenster sehr schnell. Somit werden zusätzliche Belüftungseinrichtungen notwendig, welche jedoch die Herstellungskosten und den Herstellungsaufwand zusätzlich in die Höhe treiben.

Der vorliegenden Erfindung liegt daher die Aufgabe zugrunde, eine Wetterschutzvorrichtung zu schaffen, welche dem Fahrer während der Fahrt ausreichenden Schutz vor Wind und Regen bietet und gleichzeitig ein einfaches Aus-und Einsteigen ermöglicht. Ebenso sind die einfache und schnelle Montierbarkeit sowie die Faltbarkeit auf ein kleines Packmaß Aufgabe der Erfindung.

Diese Aufgaben löst die Erfindung durch eine zusammenlegbare Wetterschutzvorrichtung, gekennzeichnet durch biegeelastische Stangen, eine von diesen gestützte Wetterschutzplane und eine im Bereich des Vorbaus des Sessel- oder Liegefahrrades befindliche Gelenkanordnung, in welcher die Stangen zwischen einer Gebrauchsstellung und einer Ein- und Ausstiegsstellung der Wetterschutzvorrichtung verschwenkbar sind, derart, dass die Stangen bei Gebrauchsstellung der Wetterschutzvorrichtung in einem aufgespreizten Zustand gebogene Mantellinien eines etwas halbkegelartigen Körpers beschreiben, der im Bereich des Vorbaus des Sessel- oder Liegefahrrads spitz zuläuft und im Bereich des Oberkörpers eines Fahrers kegelförmig aufgeweitet endet und derart, dass die Stangen bei Ein- und Ausstiegsstellung der Wetterschutzvorrichtung in einem zusammen geschobenen Zustand an einer Seite des Sessel- oder Liegefahrrads angeordnet sind.

Durch die Geometrie eines halbkegelartigen Körpers, welcher im Bereich des Vorbaus des Fahrrades spitz zusammenläuft und sich in Richtung des Fahrradhecks kegelartig erweitert, wird eine stromlinienförmige Form der Verkleidung sichergestellt, so dass die Verkleidung der angreifenden Luftströmung nur einen möglichst geringen Widerstand entgegenbringt. Die biegeelastischen Stangen sorgen dabei für eine flexible Formgebung und ein leichtes Aufspannen der von ihnen gestützten Wetterschutzplane. Die Wetterschutzplane kann wie bei einem Regenschirm durch Nähen an den biegeelastischen Stangen befestigt werden. Ebenso können die biegeelastischen Stangen aber auch in Stangentunneln geführt werden, welche in die Wetterschutzplane eingearbeitet sind. Durch die Gelenkanordnung, die sich vorteilhaft mit unter der Wetterschutzvorrichtung befindet, werden die biegeelastischen Stangen in radialer Richtung so aufgespreizt, dass eine halbkegelartige Form der darüber gespannten Wetterschutzplane entsteht. Entsprechend der Bauweise eines Liegefahrrades befinden sich dadurch das Tretlager und eventuell auch die Steuerung des Fahrrades unter der Wetterschutzplane. Infolgedessen sind die Beine und zumindest auch Teilbereiche des Oberkörpers des Fahrers vor Wind und Regen geschützt. Durch die spezielle Formgebung des halbkegelartigen Körpers lässt sich der Luftstrom so ableiten, dass der Fahrer während der Fahrt auch im Oberkörper- und Kopfbereich weitestgehend geschützt ist.

Zum Ein- und Aussteigen lassen sich die Stangen der Wetterschutzvorrichtung in der Gelenkanordnung zur linken oder rechten Fahrradseite schwenken und dadurch gleichzeitig zusammenschieben. Dadurch beansprucht die Wetterschutzvorrichtung einen nur geringen Raum. Denkbar ist hier zum Beispiel, dass die zusammengeschobene Wetterschutzvorrichtung nur noch einen Viertelkegel oder weniger beansprucht. Da das Tretlager und auch die Sitzfläche hierdurch weitestgehend unbedeckt sind, kann der Fahrer leicht seine Fahrtposition einnehmen oder verlassen.

Vorteilhaft weist die Gelenkanordnung eine Nebeneinanderordnung von Schwenkgelenken auf, wobei jedem Schwenkgelenk eine Stange zugeordnet ist. Da jede Stange in einem eigenen Schwenkgelenk gehalten wird, ist die Stabilität der Wetterschutzvorrichtung sichergestellt. Die Stangen sind dadurch zusätzlich räumlich voneinander getrennt, so dass diese sich beim Zusammenschwenken nicht gegenseitig verhaken oder behindern können.

Alternativ zu der Nebeneinanderanordnung von Schwenkgelenken lässt sich die Gelenkanordnung ebenso als Fächergelenk ausbilden. Bei einem Fächergelenk liegen die Schwenkachsen der einzelnen Stangengelenke auf einer gemeinsamen Achse, so dass dieses in Längsrichtung des Sessel- oder Liegefahrrads besonders schmal ausgebildet werden kann.

Zweckmäßig verlaufen die Schwenkachsen der Stangen parallel zu einer Längsachse des Sessel- oder Liegefahrrads. Hierdurch lässt sich die halbkegelartige Form der aufgespannten Plane einfach und stabil realisieren. In der Praxis hat sich diese Lösung als besonders geeignet herausgestellt.

Vorteilhaft im Sinne der Erfindung ist es, dass die Gelenkanordnung mittels einer Haltenase lösbar im Bereich des Vorbaus des Sessel- oder Liegefahrrads angeordnet ist. In der Praxis erfolgt die vordere Befestigung der Wetterschutzvorrichtung durch ein Stahlseil, welches um den Vorbau des Fahrrades gelegt und durch einen Spannstift geführt wird. Auf diesen Spannstift wird anschlie-βend eine Haltenase aufgesteckt, in die ein formschlüssig dazu ausgebildetes Halteteil der Gelenkanordnung eingeführt werden kann. Dadurch, dass diese Verbindung zwischen Haltenase und Gelenkanordnung lediglich eine gesteckte Verbindung ist, lässt sich die Gelenkanordnung - und damit die Wetterschutzvorrichtung - leicht und schnell von dem Fahrrad entfernen. Dies bietet erhebliche Vorteile gegenüber anderen Arten von Verbindungen, wie zum Beispiel Schraubverbindungen. Darüber hinaus ist ebenfalls die Haltenase leicht und schnell von dem Vorbau des Fahrrades zu entfernen.

Empfehlenswert ist, dass die Gelenkanordnung eine Feder aufweist, welche in Richtung der Aufspreizbewegung der Stangen wirkt. Eine solche Feder unterstützt die Aufspreizbewegung der Stangen und sorgt dafür, dass die Wetterschutzvorrichtung bei von außen angreifenden Kräften, wie zum Beispiel Wind und Regen ihre Stabilität und Form behält.

Zweckmäßig ist die erfindungsgemäße Wetterschutzvorrichtung so ausgebildet, dass mindestens eine der Stangen mittels einer Rastschließe im Bereich eines Hinterrades am Sessel- oder Liegefahrrad festlegbar ist. Diese Befestigung stabilisiert die aufgespreizte Stangenanordnung. Vorzugsweise werden die äußeren beiden Stangen der halbkegelartigen Wetterschutzvorrichtung an ihrem vom Schwenkgelenk abgewandten Ende in jeweils eine Rastschließe rechts und links vom Fahrrad eingerastet. Diese Rastschließen werden in einem Bereich des Sessel- oder Liegefahrrades befestigt, der dem auf dem Fahrrad sitzenden Fahrer ohne Mühe zugänglich ist. Empfehlenswert ist die Positionierung der Rastschließen zum Beispiel an der Schutzblechstrebe des Fahrrades. Indem die Rastschließen in der Höhe variabel an der Schutzblechstrebe angebracht werden, lässt sich zusätzlich eine Höhenverstellung der Windabrisskante erreichen. Hierdurch kann die Höhe der Windabrisskante den Körpermaßen des Fahrers angeglichen werden.

Zweckmäßig weisen die Stangen in ihrem Längenbereich Klappgelenke auf. Diese ermöglichen ein Zusammenklappen der einzelnen Stangen, so dass ein geringes Packmaß der zusammengeklappten Wetterschutzvorrichtung ermöglicht wird. Die so zusammengeklappte Vorrichtung lässt sich leicht in einer am Fahrrad bereitgestellten Tasche unterbringen, so dass sie zum Beispiel hinter dem Sitz stets für den Fahrer zugänglich ist.

Vorteilhaft weist die Wetterschutzplane Textilgewebe oder Kunststoff auf. Diese Materialien lassen sich leicht zu einer Plane verarbeiten und sind flexibel genug, um gespannt oder zusammengelegt zu werden.

Schließlich ist vorgesehen, dass die Wetterschutzvorrichtung den Fahrer nicht berührt. Dies ist insofern vorteilhaft, als der Fahrer gewöhnlich einen durch die Fahrbewegung entstehenden Kontakt mit Fahrradteilen oder auch mit Regenbekleidung als störend empfindet.

Für den Fall, dass jedoch lange Strecken bei sehr schlechtem Wetter gefahren werden, schlägt die Erfindung ergänzend eine Wetterschutzvorrichtungs-Verlängerung, insbesondere zur Verwendung in Verbindung mit der zuvor beschriebenen zusammenlegbaren Wetterschutzvorrichtung, vor, welche biegeelastische Stangen, eine von diesen gestützte Wetterschutzplane mit einer Kopfdurchgangsöffnung und Schnellverschlüsse zur Verbindung der Wetterschutzvorrichtungs-Verlängerung mit der Wetterschutzvorrichtung aufweist. Eine solche Verlängerung schließt den von der zuvor beschriebenen Wetterschutzvorrichtung gelassenen Freiraum hinter der Windabrisskante des halbkegelartigen Körpers. Die Kopfdurchgangsöffnung ist großzügig ausgebildet, so dass der Fahrer leicht, auch mit Helm, hindurchschlüpfen kann. Durch die Verbindung von Wetterschutzvorrichtung und Wetterschutzvorrichtungs-Verlängerung kann die Verlängerung gleichzeitig mit der Wetterschutzvorrichtung zur Seite geschwenkt werden. Somit kann der Fahrer leicht aus- und einsteigen ohne vorher die Verlängerung von der Wetterschutzvorrichtung demontieren zu müssen. Ebenso bietet die Verlängerung auch bei geparktem Fahrrad einen Schutz vor Regen, so dass der Sattel trocken bleibt. Hierzu wird nach dem Aussteigen einfach die Wetterschutzvorrichtung mit montierter Verlängerung zurück über das Fahrrad geschwenkt. Der Fahrer kann aber ebenso die Wetterschutzvorrichtungs-Verlängerung wie einen Poncho über Schultern und Oberkörper legen, indem er seinen Kopf durch die Kopfdurchgangsöffnung der Wetterschutzplane steckt und die biegeelastischen Stangen über seine Schultern legt. Mit Hilfe von Schnellverschlüssen kann die Wetterschutzvorrichtungs-Verlängerung in sitzender Position des Fahrers ohne Aufwand mit der Wetterschutzvorrichtung verbunden werden, so dass eine einheitliche stromlinienförmige Außenkontur der Wetterschutzvorrichtung entsteht. Das äußere Erscheinungsbild von Wetterschutzvorrichtung und - Verlängerung kann dabei zum Beispiel durch fluchtende biegeelastische Stangen beider Verkleidungsteile angeglichen werden sowie durch eine einheitliche Wetterschutzplanengestaltung.

Vorteilhaft beschreibt die Wetterschutzvorrichtungs-Verlängerung in einem aufgespannten Zustand einen halbringartigen Körper, welcher druck- und stoßfest auf den Schultern eines Fahrers aufliegt und im Bereich von Hinterrädern eines Sessel- oder Liegefahrrades mittels Taschen über einen seitlichen Endbereich der Wetterschutzvorrichtung stülpbar ist. Durch diese Ausgestaltung der Wetterschutzvorrichtungs-Verlängerung beeinträchtigt sie den Fahrer nur in möglichst geringem Maße. Im Gegensatz zu einem herkömmlichen Poncho berührt sie den Fahrer nur an Schultern und Hals. Durch die halbringartige Form bilden sich keine Regenpfützen auf der Oberfläche der Verlängerung. Ebenso ist die Verlängerung durch die gleichmäßig Anordnung der Befestigungspunkte an der Wetterschutzvorrichtung, den Schultern des Fahrers sowie den Befestigungstaschen stabil aufgespannt. Die erfindungsgemäßen Taschen sind an der Wetterschutzplane der Wetterschutzvorrichtungs-Verlängerung befestigt, so dass ein seitlicher Endbereich der Wetterschutzvorrichtung, z. B. jeweils die äußere biegeelastische Stange, eingesteckt werden kann. Denkbar ist jedoch auch die umgekehrte Anordnung, das heißt, dass die Taschen an der Wetterschutzvorrichtung befestigt sind und Endbereiche der -Verlängerung in diese eingesteckt werden.

Mit Vorteil ist die Wetterschutzvorrichtungs-Verlängerung so ausgebildet, dass die Schnellverschlüsse die biegeelastischen Stangen der Wetterschutzvorrichtungs-Verlängerung und der Wetterschutzvorrichtung miteinander verbinden. So ergibt sich für die gesamte Wetterschutzanordnung eine einheitliche Außenkontur und gleichzeitig eine stromlinienförmige und stabile Konstruktion.

Alternativ ist es jedoch auch möglich, dass die Schnellverschlüsse die biegeelastischen Stangen der Wetterschutzvorrichtungs-Verlängerung mit dem Randabschluss der Wetterschutzplane verbinden. Somit ist die Anzahl der Schnellverschlüsse unabhängig von der Anzahl der biegeelastischen Stangen, wodurch sich gegebenenfalls eine stabilere Verbindung ergibt.

Es ist vorgesehen, dass die Schnellverschlüsse Gummizugschlaufen, Knöpfe, Druckknöpfe oder Klettverschlüsse aufweisen. Eine Verbindung ist somit schnell und leicht herzustellen.

Schließlich ist vorgesehen, dass die Kopfdurchgangsöffnung der Wetterschutzplane einen in Fahrtrichtung angeordneten Schlitzkragen aufweist, welcher so ausgebildet ist, dass zwei gegenläufig in dem Schlitzkragen verlaufende Reißverschlüsse eine größenvariable Öffnung bilden. Die Position und Größe der Öffnung lässt sich so leicht und schnell an die Körpergröße des Fahrers anpassen. Zudem sind Reißverschlüsse stets eine übliche Methode, um Kleidung zu öffnen und zu schließen. Dieses System nutzt die Erfindung aus. Zusätzlich lässt sich der Kragenrandbereich so am Hals des Fahrers aufstellen, dass das Wasser entlang der Außenkontur der Wetterschutzplane abläuft und nicht in die Kopfdurchgangsöffnung und damit unter die Wetterschutzplane gelangen kann.

Ein Ausführungsbeispiel der Erfindung wird im Folgenden anhand der Figuren näher erläutert. Es zeigen:
- Figur 1:: Eine Seitenansicht eines Liegerades mit einer aufgespannten Wetterschutzvorrichtung und einem Fahrer;
- Figur 2:: Frontansicht einer Gelenkanordnung mit Stangen;
- Figur 3:: Seitenansicht eines Vorbaus des Liegerades mit Gelenkanordnung;
- Figur 4:: Eine Frontansicht der Gelenkanordnung mit zusammengeschobenen Stangen (Ein- und Ausstiegsstellung);
- Figur 5:: Eine Frontansicht der Gelenkanordnung mit aufgespreizten Stangen (Gebrauchsstellung);
- Figur 6:: Eine isometrische Ansicht der Wetterschutzvorrichtung;
- Figur 7:: Eine Draufsicht der Wetterschutzvorrichtung;
- Figur 8:: Eine isometrische Ansicht der Wetterschutzvorrichtung mit angebrachter Wetterschutzvorrichtungs-Verlängerung.

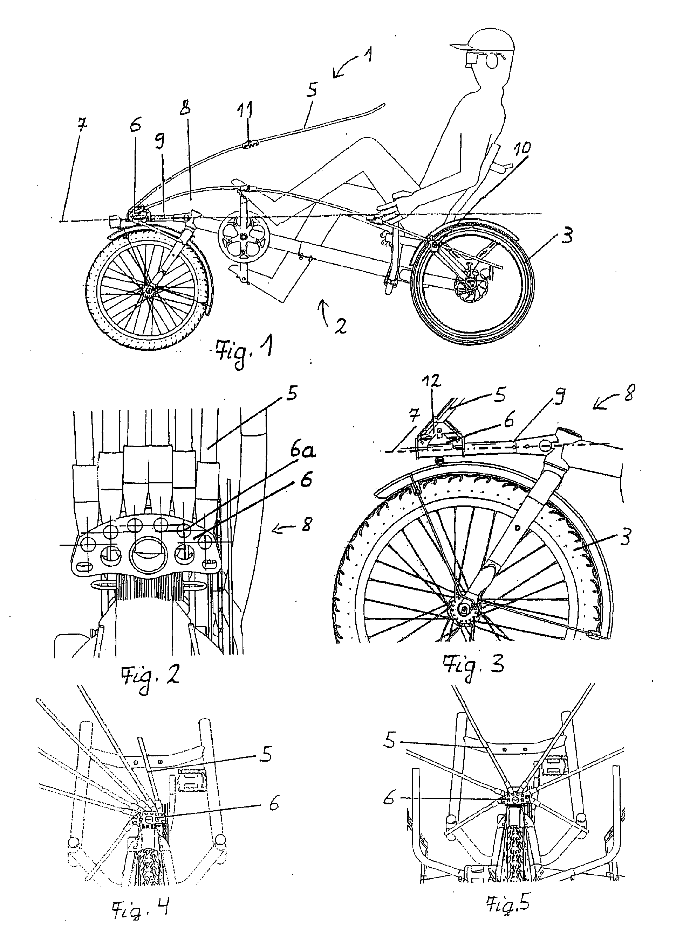

In Figur 1 ist eine Wetterschutzvorrichtung 1 dargestellt, welche auf einem Liegerad 2 angebracht ist. Die Wetterschutzvorrichtung 1 umfasst eine Gelenkanordnung 6, welche Stangen 5 im Bereich eines Vorbaus 8 des Liegerades 2 spitz zulaufend hält. Die Gelenkanordnung 6 ist mittels einer Haltenase 9 am Vorbau 8 des Liegerades 2 befestigt. Die Stangen 5 sind in der Gelenkanordnung 6 um jeweils eine Achse, welche parallel zu einer Längsachse 7 des Liegerades 2 verläuft, schwenkbar gelagert. In der dargestellten Gebrauchsstellung arretieren Rastschließen 10 die äußeren Stangen 5 der Wetterschutzvorrichtung 1 im Bereich des Hinterrades 3 des Liegerades 2. Die Stangen 5 verfügen jeweils über Klappgelenke 11.

Figur 2 zeigt eine Vorderansicht des Vorbaus 8 des Liegerades 2. In der Gelenkanordnung 6 sind Schwenkgelenke 6a nebeneinander angeordnet. Jede Stange 5 ist hierbei einem Schwenkgelenk 6a zugeordnet.

Figur 3 zeigt eine Seitenansicht des Vorbaus 8 des Liegerades 2. Mithilfe der Haltenase 9 wird die Gelenkanordnung 6 am Vorbau 8 des Liegerades 2 gehalten. Die Schwenkgelenke 6a der Stangen 5 weisen jeweils eine Brückenstruktur 12 auf, welche in die Gelenkanordnung 6 eingespannt ist.

Figur 4 und 5 stellen die beiden Zustände der Wetterschutzvorrichtung 1 dar. In Figur 4 sind die Stangen 5 der Wetterschutzvorrichtung 1 zur Seite in die Ein-und Ausstiegsstellung geschwenkt, in Figur 5 sind die Stangen 5 in die Gebrauchsstellung aufgespreizt.

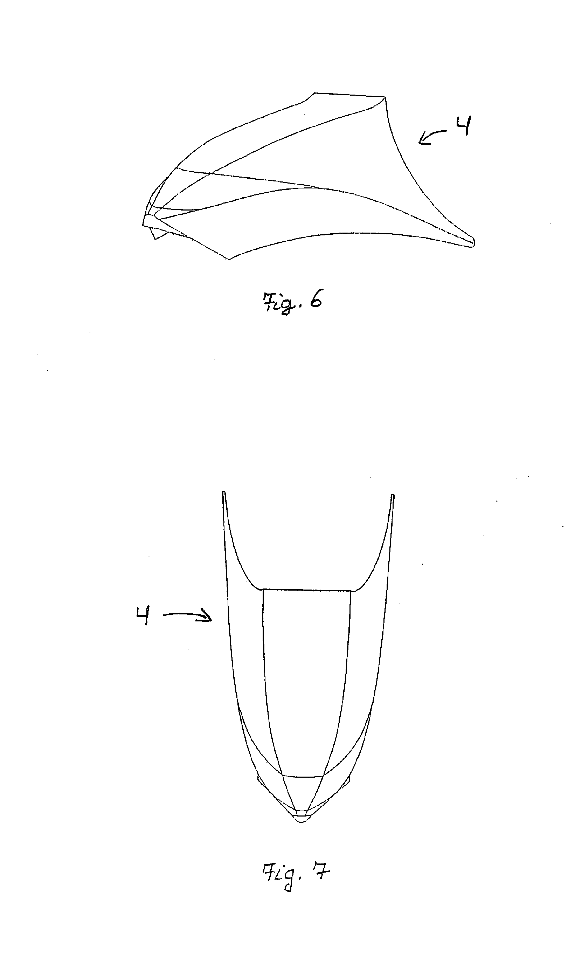

In Figur 6 und 7 ist eine Wetterschutzplane 4 im aufgespreizten Zustand, d. h. in der Gebrauchsstellung, der Wetterschutzvorrichtung 1 aus unterschiedlichen Ansichten dargestellt.

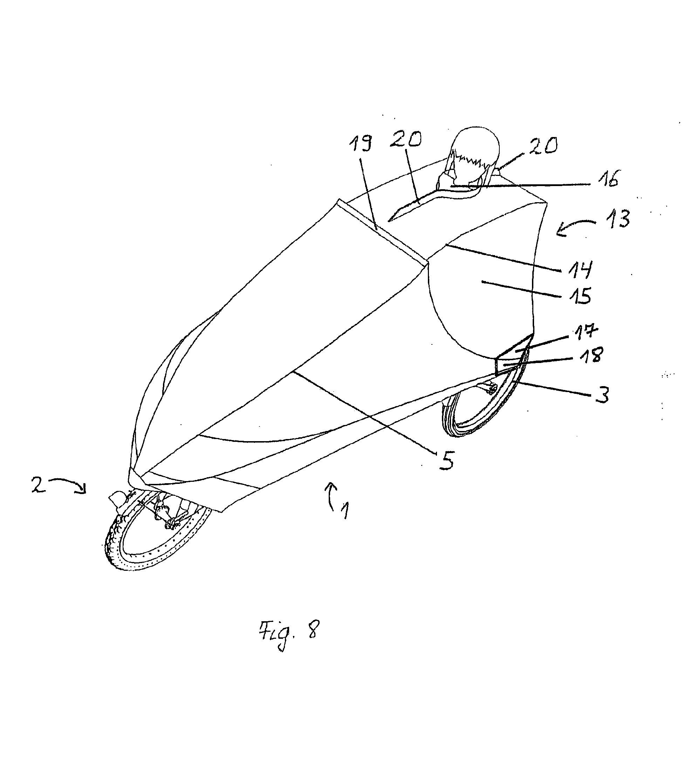

Figur 8 zeigt eine Wetterschutzvorrichtung 1 welche mit einer Wetterschutzvorrichtungs-Verlängerung 13 verbunden ist. Die Wetterschutzvorrichtungs-Verlängerung 13 umfasst biegeelastische Stangen 14 und eine von diesen gestützte Wetterschutzplane 15 mit einer Kopfdurchgangsöffnung 16. An der Kopfdurchgangsöffnung 16 befindet sich ein Schlitzkragen 20, welcher durch zwei gegenläufig verlaufende Reißverschlüsse größenvariabel ausgestaltet ist. Die Wetterschutzvorrichtungs-Verlängerung 13 ist mit Hilfe von Schnellverschlüssen (nicht dargestellt) im Bereich des Randabschlusses 19 mit der Wetterschutzvorrichtung 1 verbunden. An der Seite der Wetterschutzvorrichtungs-Verlängerung 13 sind Taschen 17 im Bereich der Hinterräder 3 des Liegefahrrades 2 angebracht, welche über seitliche Endbereiche 18 der Wetterschutzvorichtung 1 gestülpt werden.

Die Erfindung funktioniert so, dass am Vorbau 8 des Liegerades 2 eine Haltenase 9 befestigt wird. In diese Haltenase 9 wird ein formschlüssiges Halteteil der Gelenkanordnung 6 eingesteckt. Die Stangen 5 sind über Schwenkgelenke 6a nebeneinander in der Gelenkanordnung 6 angeordnet. Wenn die Stangen 5, wie in Figur 4 gezeigt, zur Seite des Liegerades 2 geschwenkt sind, setzt sich der Fahrer, wie in Figur 1 gezeigt, auf das Liegerad 2. Um die Wetterschutzvorrichtung 1 über seinen Unterkörper zu spannen, ergreift er die äußere Stange 5, welche in der Ein- und Ausstiegsstellung der Wetterschutzvorrichtung 1 nach oben weist. Diese Stange 5 verschenkt er zur Seite des Liegerades 2 und rastet sie in die Rastschließe 10, welche sich im Bereich des Hinterrades 3 am Liegefahrrad 2 befindet, ein. Auf der gegenüberliegenden Seite des Liegerades 2 wird die andere äußere Stange 5 in gleicher Weise festgelegt, sofern dies noch nicht geschehen ist. Die Wetterschutzplane 4 befindet sich nun über den Beinen des Fahrers. Während einer Ausfahrt bei regnerischem Wetter ist der Fahrer durch die Formgebung der Wetterschutzplane 4 der Wetterschutzvorrichtung 1 geschützt. Zum Absteigen von dem Liegerad 2 löst der Fahrer eine der Rastschließen 10 auf der linken oder rechten Seite des Liegerades 2. Die Wetterschutzvorrichtung 1 ist zu beiden Seiten gleichermaßen zu öffnen. Der Fahrer löst eine Stange 5 aus der Rastschließe 10 und verschwenkt die Stangen 5 in der Gelenkanordnung 6. Sodann kann er von dem Liegerad 2 absteigen.

Um die Wetterschutzvorrichtung 1 ganz vom Liegerad 2 zu entfernen, wird die Gelenkanordnung 6 aus der Haltenase 9 herausgezogen. Die Stangen 5 werden mittels der Klappgelenke 11 zusammengefaltet und in der Gelenkanordnung 6 so dicht wie möglich zusammen geschoben. Die zusammengeklappte Wetterschutzvorrichtung 1 verfügt über ein kleines Packmaß und kann in einer am Sitz befestigten Tasche (nicht dargestellt) verstaut werden.

Wenn sich der Fahrer, z. B. bei sehr starkem Regenfall, stärker schützen möchte, als dies durch die Wetterschutzvorrichtung 1 möglich ist, kann er die Wetterschutzvorrichtungs-Verlängerung 13 gemäß der Figur 8 zur Erweiterung / Verlängerung der Wetterschutzvorrichtung 1 benutzen. Hierzu verbindet er zunächst die Wetterschutzvorrichtung 1 mit der -Verlängerung 13 durch Schnellverschlüsse (nicht dargestellt). Sodann schwenkt er die Wetterschutzvorrichtung 1 mitsamt der -Verlängerung 13 zu einer Seite des Liegefahrrades 2. Nach dem Einsteigen schwenkt er die Wetterschutzvorrichtung 1 und Verlängerung 13 über seinen Oberkörper und Kopf und schlüpft gleichzeitig durch die Kopfdurchgangsöffnung 16. Um die Wetterschutzvorrichtungs-Verlängerung 13 anschließend zusätzlich zu spannen, stülpt er die an der -Verlängerung 13 angebrachten Taschen 18 über die Endbereiche 18 der Wetterschutzvorrichtung 1, welche sich auf beiden Seiten des Liegefahrrades 2 im Bereich der Hinterräder 3 befinden. Anschließend gleicht er die Größe der Kopfdurchgangsöffnung 16 an seine Körpermaße und Fahrposition an. Hierzu sind an dem Schlitzkragen 20, welcher längs der Fahrtrichtung sowohl vor als auch hinter dem Kopf des Fahrers verläuft Reißverschlüsse eingearbeitet, welche er gegenläufig so in Richtung seines Halses ziehen kann, dass der Schlitzkragen 20 dicht abschließt.

Alternativ schlüpft der Fahrer, noch neben dem Fahrrad 2 stehend, mit dem Kopf durch die Kopfdurchgangsöffnung 16 der Wetterschutzvorrichtungs-Verlängerung 13 und legt sich damit die von Stangen 14 gehaltene Wetterschutzplane 15 auf die Schultern. Sodann setzt er sich auf den Sitz des Liegefahrrades 2 und verbindet die Wetterschutzvorrichtung 1 mit der - Verlängerung 13 durch Schnellverschlüsse (nicht dargestellt). Um die Wetterschutzvorrichtungs-Verlängerung 13 zusätzlich zu spannen und den Schlitzkragen 20 auf seine Körpermaße anzupassen geht er genau so vor wie zuvor beschrieben.

## Patentansprüche

1. Zusammenlegbare Wetterschutzvorrichtung (1) zur lösbaren Anbringung an einem Sessel- oder Liegefahrrad (2), insbesondere einem Liegedreirad,
**gekennzeichnet durch**
biegeelastische Stangen (5), eine von diesen gestützte Wetterschutzplane (4) und eine im Bereich des Vorbaus des Sessel- oder Liegefahrrades befindliche Gelenkanordnung (6), in welcher die Stangen (5) zwischen einer Gebrauchsstellung und einer Ein- und Ausstiegsstellung der Wetterschutzvorrichtung verschwenkbar sind, derart,
- dass die Stangen (5) bei Gebrauchsstellung der Wetterschutzvorrichtung in einem aufgespreizten Zustand gebogene Mantellinien eines etwa halbkegelartigen Körpers beschreiben, der im Bereich des Vorbaus (8) des Sesseloder Liegefahrrads (2) spitz zuläuft und im Bereich des Oberkörpers eines Fahrers kegelförmig aufgeweitet endet,
- und dass die Stangen (5) bei Ein- und Ausstiegsstellung der Wetterschutzvorrichtung in einem zusammen geschobenen Zustand an einer Seite des Sessel- oder Liegefahrrads (2) angeordnet sind.

2. Zusammenlegbare Wetterschutzvorrichtung (1) nach Anspruch 1, **dadurch gekennzeichnet, dass** die Gelenkanordnung (6) eine Nebeneinanderanordnung von Schwenkgelenken (6a) aufweist, wobei jedem Schwenkgelenk (6a) eine Stange (5) zugeordnet ist.

3. Zusammenlegbare Wetterschutzvorrichtung (1) nach Anspruch 1, **dadurch gekennzeichnet, dass** die Gelenkanordnung (6) ein Fächergelenk mit einer gemeinsamen Schwenkachse für alle Stangen (5) aufweist.

4. Zusammenlegbare Wetterschutzvorrichtung (1) nach einem der Ansprüche 1 bis 3, **dadurch gekennzeichnet, dass** die Schwenkachsen der Stangen (5) parallel zu einer Längsachse (7) des Sessel- oder Liegefahrrads (2) verlaufen.

5. Zusammenlegbare Wetterschutzvorrichtung (1) nach einem der Ansprüche 1 bis 4, **dadurch gekennzeichnet, dass** die Gelenkanordnung (6) mittels einer Haltenase (9) lösbar im Bereich des Vorbaus (8) des Sessel- oder Liegefahrrads (2) angeordnet ist.

6. Zusammenlegbare Wetterschutzvorrichtung (1) nach einem der Ansprüche 1 bis 5, **dadurch gekennzeichnet, dass** die Gelenkanordnung (6) eine Feder aufweist, welche in Richtung der Aufspreizbewegung der Stangen (5) wirkt.

7. Zusammenlegbare Wetterschutzvorrichtung (1) nach einem der Ansprüche 1 bis 6, **dadurch gekennzeichnet, dass** mindestens eine der Stangen (5) mittels einer Rastschließe (10) im Bereich eines Hinterrades (3) am Sessel- oder Liegefahrrad (2) festlegbar ist.

8. Zusammenlegbare Wetterschutzvorrichtung (1) nach einem der Ansprüche 1 bis 7, **dadurch gekennzeichnet, dass** die Stangen (5) in ihrem Längenbereich Klappgelenke aufweisen.

9. Zusammenlegbare Wetterschutzvorrichtung (1) nach einem der Ansprüche 1 bis 8, **dadurch gekennzeichnet, dass** die Weterschutzplane (4) Textilgewebe oder Kunststoff aufweist.

10. Zusammenlegbare Wetterschutzvorrichtung (1) nach einem der Ansprüche 1 bis 9, **dadurch gekennzeichnet, dass** sie den Fahrer nicht berührt.

11. Wetterschutzvorrichtungs-Verlängerung (13), insbesondere zur Verwendung in Verbindung mit einer zusammenlegbaren Wetterschutzvorrichtung (1) nach einem der Ansprüche 1 - 10,
**gekennzeichnet durch**
biegeelastische Stangen (14), eine von diesen gestützte Wetterschutzplane (15) mit einer Kopfdurchgangsöffnung und Schnellverschlüsse zur Verbindung der Wetterschutzvorrichtungs-Verlängerung (13) mit der Wetterschutzvorrichtung (1).

12. Wetterschutzvorrichtungs-Verlängerung (13) nach Anspruch 11, **dadurch gekennzeichnet, dass** die Wetterschutzvorrichtungs-Verlängerung (13) in einem aufgespannten Zustand einen halbringartigen Körper beschreibt, welcher druck- und stoßfest auf den Schultern eines Fahrers aufliegt und im Bereich von Hinterrädern (3) eines Sessel- oder Liegefahrrades (2) mittels Taschen (17) über einen seitlichen Endbereich (18) der Wetterschutzvorrichtung (1) stülpbar ist.

13. Wetterschutzvorrichtungs-Verlängerung (13) nach Anspruch 11, **dadurch gekennzeichnet, dass** die Schnellverschlüsse die biegeelastischen Stangen (14, 5) der Wetterschutzvorrichtungs-Verlängerung (13) und der Wetterschutzvorrichtung (1) miteinander verbinden.

14. Wetterschutzvorrichtungs-Verlängerung (13) nach Anspruch 11, **dadurch gekennzeichnet, dass** die Schnellverschlüsse die biegeelastischen Stangen (14) der Wetterschutzvorrichtungs-Verlängerung (13) mit dem Randabschluss (19) der Wetterschutzplane (15) verbinden.

15. Wetterschutzvorrichtungs-Verlängerung (13) nach einem der Ansprüche 11 bis 14, **dadurch gekennzeichnet, dass** die Schnellverschlüsse Gummizugschlaufen, Knöpfe, Druckknöpfe oder Klettverschlüsse aufweisen.

16. Wetterschutzvorrichtungs-Verlängerung (13) nach einem der Ansprüche 11 bis 15, **dadurch gekennzeichnet, dass** die Kopfdurchgangsöffnung (16) einen in Fahrtrichtung angeordneten Schlitzkragen (20) aufweist, welcher so ausgebildet ist, dass zwei gegenläufig in dem Schlitzkragen (20) verlaufende Reißverschlüsse eine größenvariable Öffnung bilden.
